Europäisches Patentamt

European Patent Office

Office européen des brevets

(11) Veröffentlichungsnummer: **0 445 363 A1**

## (12) EUROPÄISCHE PATENTANMELDUNG

(21) Anmeldenummer: 90121426.2

(22) Anmeldetag: 08.11.90

(51) Int. Cl.5: **B23B 47/28**

(30) Priorität: 09.01.90 DE 4000456

(43) Veröffentlichungstag der Anmeldung:
**11.09.91 Patentblatt 91/37**

(84) Benannte Vertragsstaaten:
**AT BE CH DE DK ES FR GB GR IT LI LU NL SE**

(71) Anmelder: **Heller, Bernhard**
**Antersberg 6**
**W-8201 Tuntenhausen(DE)**

(72) Erfinder: **Heller, Bernhard**
**Antersberg 6**
**W-8201 Tuntenhausen(DE)**

(74) Vertreter: **Kern, Wolfgang, Dipl.-Ing. et al**
**Patentanwälte Kern, Brehm und Partner**
**Albert-Rosshaupter-Strasse 73**
**W-8000 München 70(DE)**

(54) Fräs- oder Bohrvorrichtung.

(57) Die Erfindung betrifft eine Fräs- oder Bohrvorrichtung (1) zur Herstellung von in Reihe in gleichen
Abständen hintereinander in einem Werkstück herzustellenden Vertiefungen, Löchern, Bohrungen o.
dgl. mittels einer auf das Werkstück auflegbaren
Fräs- oder Bohrschablone.

Um die Herstellung von in Reihe hintereinander
angeordneten Vertiefungen, Löchern oder Bohrungen in Werkstückoberflächen zu vereinfachen, wird
eine Weiterbildung mit einem durch einen an der
Fräs- oder Bohrvorrichtung (1) in Fräsvorschubrichtung A und parallel zu dieser einstellbar befestigten
Positionierungsstab (2) vorgeschlagen, der die jeweilige Ausnehmung der auf der zu bearbeitenden
Oberfläche des Werkstücks (6) aufliegenden Schablone (3), die an ihrem Außenrand wenigstens einen
an der Randkante des Werkstücks anlegbaren Anschlag aufweist, bis zur Werkstückoberfläche durchgreift, wobei die Schablone (3) mit einer Halterungs-
und Führungsvorrichtung (25) verbindbar ist, bestehend aus zwei zueinander parallel verlaufenden Winkelprofilschienen (16,17) die durch wenigstens eine
mit beiden Profilschienen gelenkig verbundenen Verbindungslasche (18) in einem einstellbaren Abstand
zueinander haltbar sind, der jeweils der Dicke des
Werkstücks entspricht, auf das die Schablone (3)
aufgesetzt wird, und die mit Verbindungszapfen
(19,20) versehen ist, welche in die Ausnehmungen u.
dgl. der Schablone (3) eingreifen.

Fig.2

## FRÄS- ODER BOHRVORRICHTUNG

Die Erfindung betrifft eine Fräs- oder Bohrvorrichtung zur Herstellung von in Reihe in gleichen Abständen hintereinander in einem Werkstück herzustellenden Vertiefungen, Löchern, Bohrungen o.dgl. mittels einer auf das Werkstück auflegbaren Fräs- oder Bohrschablone.

Bohrschablonen für Lochreihenbohrungen sind aus der DE-OS 30 39 609 bekannt. Sie bestehen aus einer Grundplatte mit einer Führungsschiene, in die Löcher gebohrt sind, die zur Aufnahme von Stiften dienen, welche die Funktion von Seitenanschlägen haben. Auf der Oberseite dieser Schablonen befinden sich in gleichen Abständen Paßlöcher. Über die mit einer Führungsschiene versehene Grundplatte wird der Bohrschlitten geführt, auf dem das Bohrgerät in Form einer Oberfräse befestigt ist, das als Einheit zusammen mit dem Bohrschlitten auf der Führungsschiene entlanggeführt wird. Ein Arretierungsstift rastet jeweils in ein Paßloch ein, woraufhin der Bohrer durch den Bohrschlitten und die Bohrschablone hindurch in das zu bearbeitende Werkstück hineingeführt wird.

Diese bekannte Bohrschablone bzw. Kombination aus Schablone und Bohrgerät bietet jedoch keine Möglichkeit, der schnellen Herstellung von mit Abstand hintereinander anzuordnenden Vertiefungen, insbesondere Bohrungen in Werkstückoberflächen, beispielsweise von Löchern in Schrankseitenwänden zur Aufnahme von Schrankbodenhalterungsstopfen, da der Bohrschlitten des Gerätes nach jeder Lochherstellung in umständlicher Weise neu positioniert werden muß, damit der Bohrer das folgende Schablonenloch erreicht, wobei insbesondere keinerlei Vorkehrungen getroffen sind, die dafür sorgen, daß die herzustellenden Bohrungen eine bestimmte Tiefe nicht überschreiten.

Es ist ferner eine Vorrichtung zur Schnittiefeneinstellung von Handoberfräsen bekannt (DGM 74 15 327), die mit einem am Fräsgerät abgestützten, parallel zur Achse des Fräswerkzeuges geführten Führungsrahmen und mit mindestens einem an diesem Führungsrahmen angeordneten Anschlag zur Begrenzung der Relativbewegung zwischen Führungsrahmen und Fräsgerät versehen ist und einen Einstellstab in Form eines Gewindestiftes aufweist, mit dem der Abstand zwischen dem Führungsrahmen und dem Fräsgerät stufenlos verstellt werden kann, wobei Bohrungen zum Hindurchstecken von Stangen zum Zwecke der Montage an Zusatzgeräten vorgesehen sind.

Diese Vorrichtung bietet jedoch keine Möglichkeit der einfachen Herstellung von Lochreihen auf Werkstückoberflächen, da sie hierzu eine Schablone benötigt. Selbst wenn jedoch die Schablone der oben genannten Art mit der letztgenannten Vorrichtung kombiniert würde, würden die bei der bekannten Bohrschablone vorhandenen, oben geschilderten Nachteile bei der Herstellung solcher Lochreihen nicht beseitigt werden können.

Die Aufgabe der Erfindung besteht deshalb darin, die Fräs- oder Bohrvorrichtung der eingangs genannten Art so weiterzubilden, daß sie in Verbindung mit einer Schablone eine einfache Herstellung von in Reihen angeordneten Vertiefungen, Löchern oder Bohrungen in gleichen Abständen in Werkstückoberflächen ermöglicht, wobei an den Einsatz einer solchen Vorrichtung insbesondere in Handwerksbetrieben gedacht ist, in denen derartige Vorrichtungen noch von Hand über die zu bearbeitenden Werkstücke geführt werden.

Diese Aufgabe wird erfindungsgemäß gelöst durch einen an der Fräs- oder Bohrvorrichtung in Fräsvorschubrichtung und parallel zu dieser einstellbar befestigten Positionierungsstab, der die jeweilige Ausnehmung der auf der zu bearbeitenden Oberfläche des Werkstücks aufliegenden Schablone, die an ihrem Außenrand wenigstens einen an der Randkante des Werkstücks anlegbaren Anschlag aufweist, bis zur Werkstückoberfläche durchgreift.

Grundgedanke der Erfindung ist somit, an der Fräs- oder Bohrvorrichtung, parallel zur Werkzeugvorschubrichtung, also Absenkrichtung des Bohrers oder Fräsers, einen Fühler zu befestigen, der zur Positionierung in eine Ausnehmung der Schablone eintaucht, die vom Ort des gewünschten Materialabtrags den gleichen Abstand aufweist wie der Fühler von der Achse des Fräs- oder Bohrwerkzeugs. Dadurch wird erreicht, daß das Fräs- oder Bohrwerkzeug bei in Reihe hintereinander herzustellenden Vertiefungen nur jeweils soweit verschoben werden muß, bis der Fühler, der die Form eines Positionierungsstabs aufweist, in die nächstfolgende Ausnehmung der Schablone eingreift, wodurch dann automatisch der richtige Abstand für die herzustellende Bohrung festgelegt ist, ohne daß es zeitraubender und arbeitsintensiver Einstellvorgänge bedarf.

Für den Fall, daß die Fräs- oder Bohrvorrichtung eine Oberfräse ist und der Führungstisch der Oberfräse mit einer ihn durchsetzenden Bohrung versehen ist, läßt sich der Positionierungsstab auch als Tiefenbegrenzer verwenden, der in die genannte Bohrung eingreift und durch sie hindurch in die jeweilige Positionierungsausnehmung der Schablone einführbar ist.

Gemäß einer weiteren vorteilhaften Ausgestaltung der Erfindung lassen sich der oder die Randkantenanschläge der Schablone in bezug auf die Randkanten des zu bearbeitenden Werkstücks verschwenkbar anbringen.

Die erfindungsgemäße Vorrichtung hat sich insbesondere in Verbindung mit Schablonen zur Herstellung von geraden Lochreihen bewährt, wobei die Schablone aus einem langen lattenförmigen Körper von in etwa rechteckigem Querschnitt besteht, der entlang seiner Oberfläche mit den mit Abstand hintereinander angeordneten Positionierungsbohrungen für den Positionierungsstab und gleichzeitig Tiefenbegrenzer und entlang seiner Mittellinie mit von dem Fräswerkzeug zu durchgreifenden Bohrungen versehen ist, die sich in einer Längsnut der Schablone befinden, welche gleichzeitig als Laufführung für die Oberfräse dient.

Gemäß einer weiteren vorteilhaften Ausgestaltung der Erfindung, die sich insbesondere in den Fällen bewährt hat, in denen die Fräs- oder Bohrvorrichtung zur Herstellung von Öffnungen, Bohrungen u.dgl. in den Stirnseiten von Wänden, beispielsweise Schranktüren, eingesetzt werden soll, läßt sich die Schablone mit einer Halterungs- und Führungsvorrichtung verbinden, bestehend aus zwei zueinander parallel verlaufenden Winkelprofilschienen, die durch wenigstens eine mit beiden Profilschienen gelenkig verbundene Verbindungslasche in einem einstellbaren Abstand zueinander haltbar sind, der jeweils der Dicke des Werkstücks entspricht, auf das die Schablone aufgesetzt wird und die mit Verbindungszapfen versehen ist, welche in die Ausnehmungen, Bohrungen u.dgl. der Schablone eingreifen. Dabei kann die Einstellbarkeit des Abstandes der beiden Winkelprofilschienen zueinander mit Hilfe der Verbindungslasche oder -laschen, die an dem einen Schenkel jeder Winkelprofilschiene drehbar angebracht sind, auch stufenlos sein, wodurch die Möglichkeit gegeben ist, diesen Abstand genau an die Dicke des jeweils zu bearbeitenden Werkstücks, auf das die die Fräs- und Bohrvorrichtung tragende Halterungs- und und Führungsvorrichtung aufsteckbar ist, angepaßt wird.

Die Halterung der Fräs- oder Bohrvorrichtung selbst auf der Halterungs- und Führungsvorrichtung läßt sich dadurch besonders günstig bewerkstelligen, daß die Verbindungszapfen auf den Verbindungslaschen angeordnet sind und sich in Richtung des Bodens der Schablone erstrecken.

Die oben genannte Erfindungsaufgabe kann aber auch mit vergleichbaren Mitteln dadurch gelöst werden, daß die Schablone zur Herstellung von geraden Lochreihen aus einem langen lattenförmigen Körper von in etwa rechteckigem Querschnitt besteht, der entlang seiner Mittellinie mit von dem Fräs- oder Bohrwerkzeug zu durchgreifenden Bohrungen versehen ist, die sich in einer Längsnut der Schablone befinden, welche gleichzeitig als Laufführung für die Oberfräse dient, und daß das Fräs- oder Bohrwerkzeug von einem Anlaufringkörper umgeben ist, dessen Durchmesser bzw. Umriß dem Durchmesser bzw. Umriß der von dem Fräs- oder Bohrwerkzeug zu durchgreifenden Ausnehmungen, Bohrungen u.dgl. entspricht und der in diese Ausnehmungen, Bohrungen u.dgl. einrastbar ist.

Diese Lösung stellt eine gewisse Vereinfachung gegen- über über der erstgenannten Lösung insofern dar, als auf die Verwendung eines an der Fräs- oder Bohrvorrichtung in Fräsvorschubrichtung A und parallel zu dieser einstellbar befestigten Positionierungsstab, der die jeweiligen Ausnehmungen der auf der zu bearbeitenden Oberfläche des Werkstücks aufliegenden Schablone durchgreift, verzichtet wird.

Diese Konstruktion läßt sich entsprechend einer im Hinblick auf die erstgenannte Lösung erläuterten vorteilhaften Ausgestaltung dadurch weiter verbessern, daß auch hier die Schablone mit einer Halterungs- und und Führungsvorrichtung verbindbar ist, bestehend aus zwei zueinander parallel verlaufenden Winkelprofilschienen, die durch wenigstens eine mit den beiden Profilen gelenkig verbundene Verbindungslasche in einem einstellbaren Abstand zueinander haltbar sind, der jeweils der Dicke des Werkstücks entspricht, auf das die Schablone aufgesetzt wird und die mit Verbindungszapfen versehen ist, welche in die Ausnehmungen, Bohrungen u.dgl. der Schablone eingreifen.

Die Erfindung wird nachfolgend anhand der in der Zeichnung dargestellten Ausführungsbeispiele näher erläutert. In der Zeichnung zeigen:

| | |
|---|---|
| Fig. 1 | eine Vorderansicht einer Fräs- oder Bohrvorrichtung in Form einer Oberfräse sowie einer auf einem zu bearbeitenden Werkstück aufliegenden Schablone, auf der die Oberfräse aufsitzt, in schematischer Darstellung, |
| Fig. 2 | eine schematische, perspektivische Ansicht der Schablone in Form eines lattenförmigen Körpers von in etwa rechteckigem Querschnitt, |
| Fig. 3 | eine Draufsicht der Schablone von Fig. 2, |
| Fig. 4 | eine Seitenansicht der Schablone von Fig. 2, |
| Fig. 5 | eine Querschnittsansicht der Schablone von Fig. 3, längs der Linie III-III in Fig. 3, |
| Fig. 6 | eine schematische, perspektivische Ansicht der Schablone entsprechend Fig. 2, sowie ihrer Halterungs- und Führungsvorrichtung, aufgesetzt auf die Stirnseite eines Werkstücks, |
| Fig. 7 | eine Draufsicht einer Ausführungs- |

Fig. 8　　　eine Stirnansicht der Vorrichtung von Fig. 7,

Fig. 9　　　eine Seitenansicht der Vorrichtung von Fig. 7,

Fig. 10　　eine der Fig. 7 ähnliche Draufsicht der Halterungs- und Führungsvorrichtung, bei der die Winkelprofilschienen zur Verringerung des gegenseitigen Abstandes in bezug aufeinander versetzt sind und

Fig. 11　　eine der Fig. 1 vergleichbare Vorderansicht einer anderen Ausführungsform der Fräs- oder Bohrvorrichtung ohne Positionierungsstab, bei der das Fräs- oder Bohrwerkzeug von einem Anlaufringkörper umgeben ist.

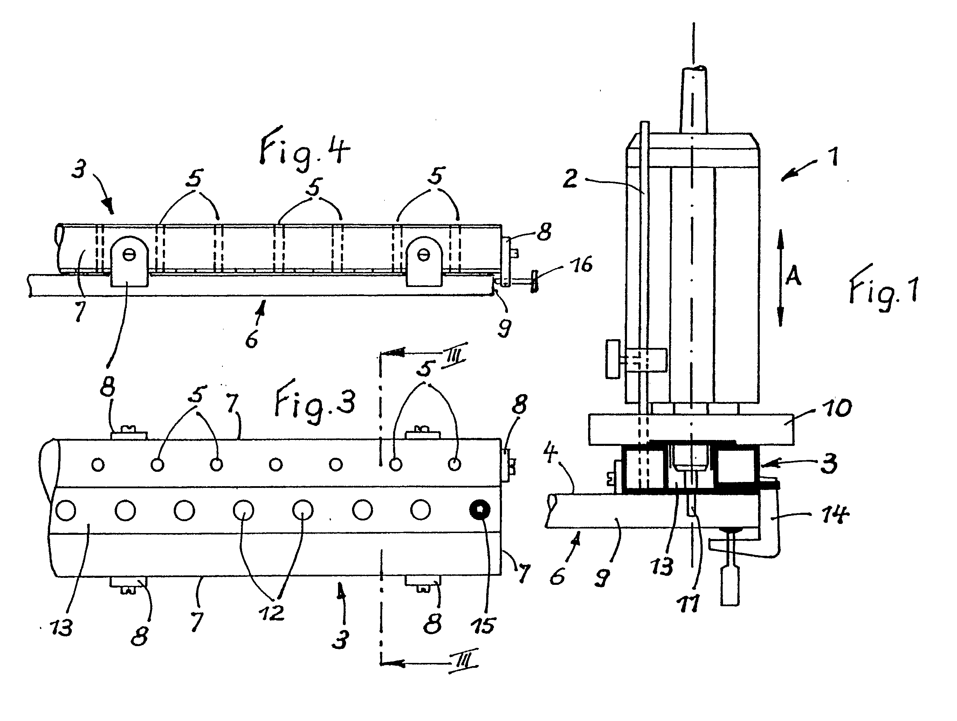

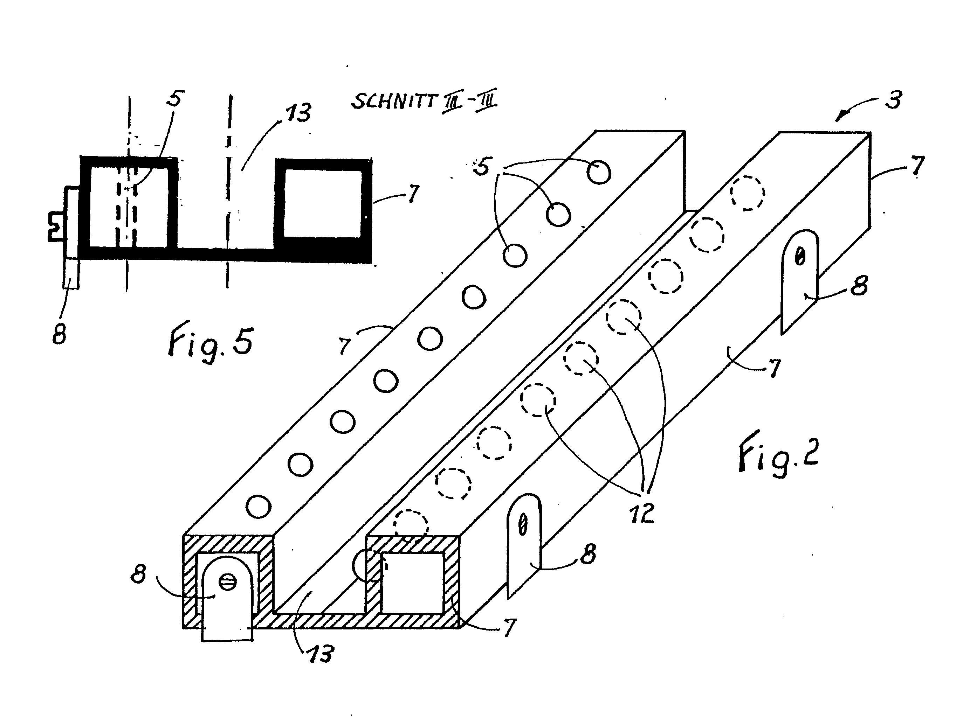

Die in Fig. 1 dargestellte Fräs- oder Bohrvorrichtung 1 ist eine Oberfräse, welche von Hand über eine in den Fig. 2 bis 5 dargestellte Schablone 3 bewegbar ist, auf der sie mit einem Führungstisch 10 aufsitzt. Die Unterseite der Schablone liegt auf der Oberfläche 4 eines zu bearbeitenden Werkstücks 6 auf, das aus einem an sich beliebigen Material, beispielsweise Holz, Kunststoff oder Metall, besteht und in dem mit Hilfe eines Fräswerkzeugs 11 eine Vielzahl von in Reihe in gleichen Abständen hintereinander angeordneten Löchern bestimmter Tiefe hergestellt werden sollen, welche zur Aufnahme von Schrankbodenhalterungszapfen dienen sollen.

An der Oberfräse 1, etwa in Fräsvorschubsrichtung A und damit in Richtung des sich bei der Herstellung der Löcher im Werkzeug 6 bewegenden Fräswerkzeugs 11, und parallel zu dieser Vorschubrichtung A ist ein Positionierungsstab 2 einstellbar befestigt, der die jeweilige Bohrung 5, generell als Ausnehmung bezeichnet, der auf der zu bearbeitenden Oberfläche 4 des Werkstücks 6 aufliegenden Schablone 3 durchgreift. Dieser Positionierungsstab ist somit Bestandteil der Oberfräse, gleichzeitig jedoch auch funktioneller Bestandteil der Schablone, da er beim von Hand erfolgenden Verschieben der Oberfräse in Längsrichtung der Schablone in die aufeinanderfolgenden Bohrungen 5, die in gleichem Abstand voneinander getrennt sind, angreift. Dieser Positionierungsstab ist gleichzeitig als Tiefenbegrenzer für die im Werkstück 6 herzustellenden Bohrungen ausgebildet, bewirkt also, daß das Fräswerkzeug 11 nur bis zu einer bestimmten Bohrtiefe in das Werkstück eindringt. Zu diesem Zweck ist der Führungstisch 10 der Oberfräse mit einer ihn durchsetzenden und mit dem Tiefenbegrenzer fluchtenden Bohrung versehen, durch die hindurch der Tiefenbegrenzer in die jeweilige Bohrung 5 der Schablone 3 einführbar ist.

An den die Schablone begrenzenden Außenrändern 7 befinden sich Randkantenanschläge 8, die in bezug auf die Randkanten 9 des zu bearbeitenden Werkstücks 6 verschwenkbar sind, so daß die Schablone 3, die bei der dargestellten Ausführungsform ein langer, lattenförmiger Körper mit in etwa rechteckigen Querschnitt ist, an mindestens einer Werkstückkante so gehaltert werden kann, daß sie sich auf der Werkstückoberfläche nicht verschieben kann. Zusätzlich läßt sich die Schablone mittels Zwingen, wie bei 14 in Fig.1 dargestellt, falls erforderlich, an dem Werkstück festklemmen.

Die in der Mittellinie des Schablonenkörpers befindliche Längsnut 13, in deren Boden sich die vom Fräswerkzeug 11 zu durchgreifenden Bohrungen 12 befinden, deren Abstände mit den Abständen der Bohrungen oder Ausnehmungen 5 in der Schablone korrelieren, dient dem Fräswerkzeug 11 als Führung und hat den Vorteil, daß die Oberfräse nicht von Fräsung zu Fräsung abgehoben werden muß, sondern sich in dieser Längsnut von einer Bohrung 5 so weit verschieben läßt, bis der Tiefenbegrenzer bzw. Positionierungsstab 2 in die nächstfolgende Bohrung eintauchen kann.

In den Fällen, in denen von den aufeinanderfolgenden Ausnehmungen bzw. Bohrungen 5 der Schablone 3 nicht alle genutzt werden sollen, weil beispielsweise die Herstellung von Löchern im Werkstück in einem größeren Abstand verlangt wird, können die nicht zu benutzenden Bohrungen 5 mit Hilfe von nicht dargestellten Stopfen verschlossen werden, so daß beim Weiterschieben der Oberfräse bzw. ihres Führungstisches 10 und damit Fräswerkzeugs 11 in der Längsnut 13 diese verschlossenen Bohrungen 5 von dem Positionierungsstab 2 und Tiefenbegrenzer überlaufen werden. Auf diese Weise ist die Möglichkeit gegeben, eine Schablone an unterschiedliche Bohrprogramme bei der Herstellung von Bohrreihen in beispielsweise Schrankseiten von Möbeln ohne weiteres anzupassen.

Mit Hilfe eines oder mehrerer Arretierungsstifte 15, wie in Fig. 3 dargestellt, die eine oder mehrere der Bohrungen 12 in der Längsnut 13 durchgreifen, läßt sich die Schablone 3, falls erforderlich, ohne weiteres um weitere Längenstücke verlängern, wobei dann die Arretierungsstifte als Verbindungselemente zwischen den aufeinanderfolgenden Längenstücken dienen.

Darüberhinaus können der oder die Anschlüsse 8, wie aus Fig. 4 ersichtlich, die sich an den Außenrändern 7 der Schablone 3 befinden, mit Abstandsschrauben 16a versehen werden, mittels derer eine exakte Justierung der Schablone in bezug auf das zu bearbeitende Werkstück 6 möglich ist. Zu diesem Zweck werden die Abstandsschrauben gegen die Randkanten 9 des Werkstücks geschraubt.

Es versteht sich, daß die Herstellung von Bohrungen im Werkstück 6 mit Hilfe der erfindungsgemäßen Fräs- oder Bohrvorrichtung, wie dies im obigen beschrieben wurde, nur als Beispiel zu verstehen ist, da anstelle von Bohrungen auch andere Vertiefungen oder Löcher hergestellt werden können, wenn dies in einer bestimmten Reihenfolge auf der Oberfläche des Werkstücks erfolgen soll, welche dann durch die Positionierungsausnehmungen bzw. -bohrungen 5 abstandmäßig und im Hinblick auf ihre Tiefe jeweils vorzugeben sind.

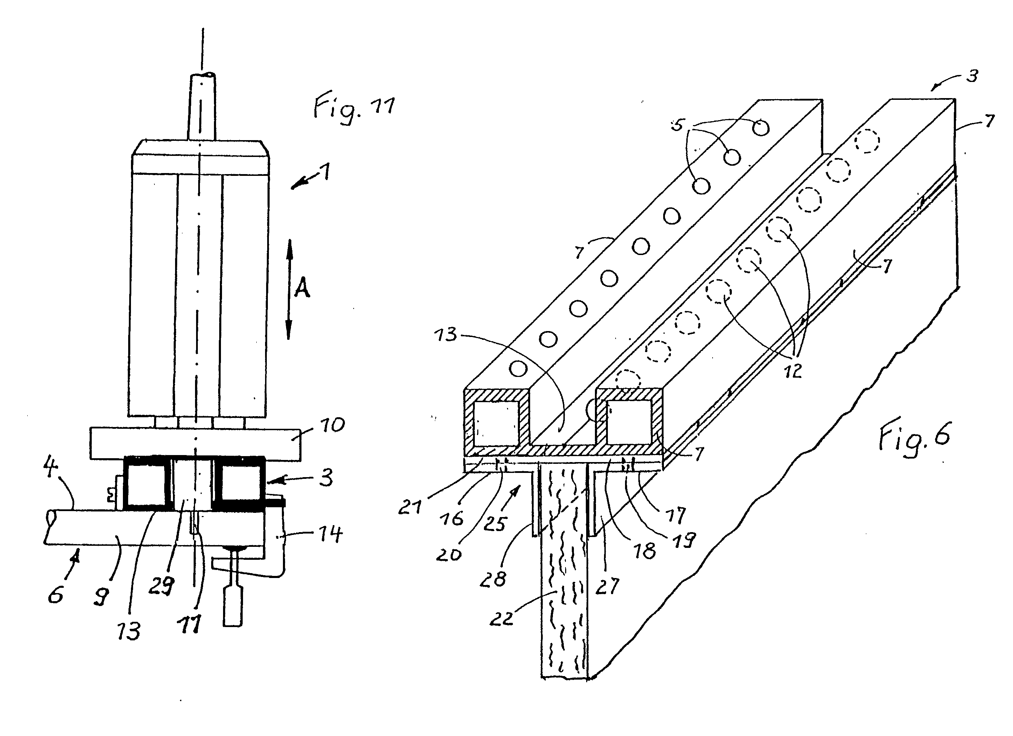

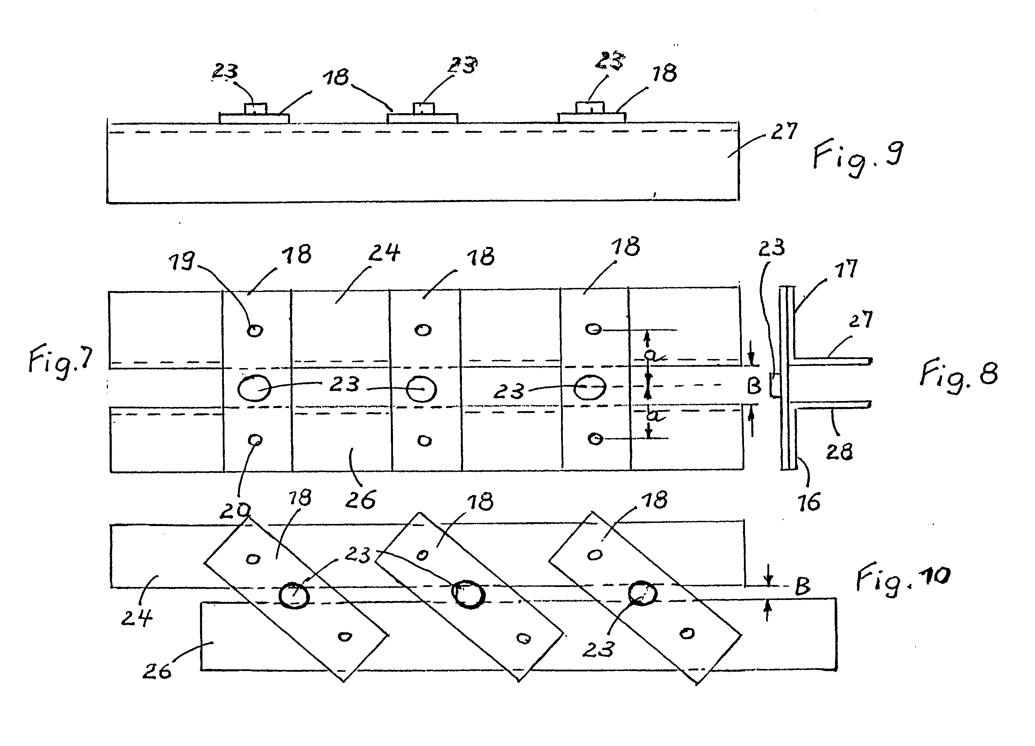

Bei der in Fig. 6 dargestellten Ausführungsform ist die Schablone 3 mit einer Halterungs- und Führungsvorrichtung 25 verbunden, bestehend aus zwei zueinander parallel verlaufenden Winkelprofilschienen 16, 17, die durch wenigstens eine mit den beiden Profilschienen gelenkig verbundene Verbindungslasche 18 in einem einstellbaren Abstand zueinander haltbar sind, wie dies im Detail aus den Figuren 7 bis 9 ersichtlich ist, die die Halterungs- und Führungsvorrichtung 25 von der Schablone 3 getrennt darstellen. Im Falle der Ausführungsform nach Fig. 7 sind die beiden parallelen Profilschienen 16 und 17 durch drei mit Abstand nebeneinanderliegende Verbindungslaschen 18 gelenkig miteinander dadurch verbunden, daß diese Laschen mit den in einer gemeinsamen Ebene liegenden einen Schenkeln 24, 26 der beiden rechtwinkeligen Profilschienen 16 und 17 mittels Zapfen 19 und 20 in Drehverbindung stehen, wobei diese Zapfen jeweils in gleichem Abstand a von der Längsmittellinie der Vorrichtung 25 angeordnet sind. Durch diese Gelenkzapfen 19, 20 lassen sich, wie aus Fig. 10 ersichtlich, die beiden parallelen Profilschienen in bezug aufeinander verschieben, wodurch ihr gegenseitiger Abstand B einstellbar ist. Die Größe dieses Abstandes richtet sich nach der Dicke des Werkstücks 22 (Fig. 6), auf das die Halterungs- und Führungsvorrichtung und damit die Schablone aufgesetzt werden soll, und das beispielsweise eine Schranktür oder Schrankwand oder ähnliche plattenförmige Gebilde sein kann, das in ihrer Stirnseite mit Hilfe eines Fräs- oder Bohrwerkzeugs 11, das in den Fig. 1 und 11 schematisch dargestellt ist, mit Aussparungen, Bohrungen o. dgl. versehen werden soll.

Um zwischen der Schablone 3 bzw. ihrem Boden 21 und der Halterungs- und Führungsvorrichtung 25 und insbesondere deren Verbindungslaschen 18 eine lösbare Verbindung herstellen zu können, sind an den Verbindungslaschen 18 in der Längsmittellinie der Vorrichtung 25 und damit also im halben Abstand B zu den Winkelprofilschienen 16 und 17 Verbindungszapfen 23 angebracht, die sich in Richtung des Bodens 21 der Schablone 3 erstrecken. Der Abstand dieser Verbindungszapfen 23 voneinander sowie ihr Durchmesser bzw. ihre Umrißkonfiguration entspricht dem Abstand der Ausnehmung bzw. Bohrungen 12 im Boden der Schablone, die von dem Fräs- oder Bohrwerkzeug 11 durchgriffen werden. Dadurch läßt sich die Schablone ohne weiteres auf die Halterungs- und Verbindungsvorrichtung aufstecken, wobei die Verbindungszapfen 23 in die Ausnehmungen oder Bohrungen 12 einrasten. Die auf den beidseitigen Oberflächen des Werkstücks 22 aufliegenden Schenkel 27 und 28 der Winkelprofilschienen ermöglichen eine sichere Führung der Schablone auf dem Werkstück, ohne daß die Schablone von der Werkstückseitenkante herunterfällt oder sich auch nur verkantet.

Bei einer anderen Ausführungsform der Fräs- oder Bohrvorrichtung, wie sie in Fig. 11 ebenfalls in Form einer Oberfräse sowie einer auf einem zu bearbeitenden Werkstück aufliegenden Schablone, auf der die Oberfräse aufsitzt, schematisch dargestellt ist, wird kein Positionierungsstab der bei 2 in Fig. 1 dargestellten Art verwendet, sondern im Hinblick auf eine weitere Vereinfachung der Vorrichtung ein Anlaufringkörper 29, der das Fräse- oder Bohrwerkzeug 11 umgibt und dessen Durchmesser bzw. Umriß dem Durchmesser bzw. Umriß der von dem Fräse- oder Bohrwerkzeug zu durchgreifenden Ausnehmungen, Bohrungen 12 o. dgl. entspricht. Das untere Ende dieses Anlaufringkörpers weist von dem Führungstisch 10 einen Abstand auf, der größer ist als der Abstand dieses Tisches von der Oberfläche 4 des zu bearbeitenden Werkstücks 6, so daß der Anlaufringkörper 29 in die Bohrungen 12 o. dgl. im Boden 13 der Schablone 3 eintreten kann und dadurch eine Führung für das Fräse- oder Bohrwerkzeug 11 darstellt, ohne daß es eines Positionierungsstabes bedarf.

Auch bei dieser Ausführungsform ist wiederum die Möglichkeit gegeben, die Schablone 3 mit einer Halterungs- und Führungsvorrichtung 25 der oben beschriebenen Art zu verbinden, bestehend aus zwei zueinander parallel verlaufenden Winkelprofilschienen 16 und 17, die durch wenigstens eine mit den beiden Profilschienen gelenkig verbundenen Verbindungslasche 18 in einem einstellbaren Abstand zueinander haltbar sind, der jeweils der Dicke des Werkstücks entspricht, auf das die Schablone aufgesetzt wird, und die mit Verbindungszapfen 23 versehen ist, welche in die Bohrungen 12 o. dgl. der Schablone eingreifen. In diesem Zusammenhang wird auf die in den Fig. 7 bis 10 dargestellte Ausführungsform einer solchen Halterungs- und Führungsvorrichtung verwiesen.

Grundsätzlich besteht die Möglichkeit, die Schablone 3 auch so auszubilden, daß sie anstelle des in den Fig. 2 und 5 dargestellten Querschnittsprofils, das durch eine Führungsnut für die Oberfräse gekennzeichnet ist, keine solche Nut aufweist, sondern einen flachen Körper mit rechteckförmigem Querschnittsprofil bildet und sie mit Bohrungen bzw. Ausnehmungen zu versehen, deren Umriß und Profil den im Werkstück herzustellenden Vertiefungen entspricht, wobei darüberhinaus die Schablonen der letztbeschriebenen oder eingangs genannten Art mit sämtlichen Markierungen versehen sein können, die zum Anschlagen von Beschlägen oder zum Erstellen von Werkstücken, beispielsweise Möbelteilen, erforderlich sind.

Falls in den Seiten des zu bearbeitenden Werkstücks 22 (Fig.6) im Bereich der Halterungs- und Führungsvorrichtung 25 der Schablone Löcher oder Bohrungen hergestellt werden sollen, braucht die Halterungs- und Führungsvorrichtung bzw. mit deren Winkelprofilschienen 16, 17, nur von der Schablone abgenommen zu werden, indem die Verbindungszapfen aus den Bohrungen 12 der Schablone herausgezogen werden.

## Patentansprüche

1. Fräs- oder Bohrvorrichtung zur Herstellung von in Reihe in gleichen Abständen hintereinander in einem Werkstück herzustellenden Vertiefungen, Löchern, Bohrungen o.dgl. mittels einer auf das Werkstück auflegbaren Fräs- oder Bohrschablone, **gekennzeichnet** durch einen an der Fräs-oder Bohrvorrichtung (1) in Fräsvorschubrichtung A und parallel zu dieser einstellbar befestigten Positionierungsstab (2), der die jeweilige Ausnehmung (5) der auf der zu bearbeitenden Oberfläche (4) des Werkstücks (6) aufliegenden Schablone (3), die an ihrem Außenrand (7) wenigstens einen an der Randkante (9) des Werkstücks anlegbaren Anschlag (8) aufweist, bis zur Werkstückoberfläche (4) durchgreift.

2. Vorrichtung nach Anspruch 1, dadurch **gekennzeichnet,** daß die Fräs- oder Bohrvorrichtung (1) eine Oberfräse ist, bei der der Positionierungsstab (2) auch als Tiefenbegrenzer dient und der Führungstisch der Oberfräse mit einer ihn durchsetzenden und mit dem Tiefenbegrenzer fluchtenden Bohrung versehen ist, durch die hindurch der Tiefenbegrenzer in die jeweilige Positionierungsausnehmung (5) der Schablone (3) einführbar ist.

3. Vorrichtung nach Anspruch 1 oder 2, dadurch **gekennzeichnet,** daß der oder die Randkantenanschläge (8) der Schablone (3) in bezug auf die Randkanten des zu bearbeitenden Werkstücks verschwenkbar angebracht sind.

4. Vorrichtung nach einem der Ansprüche 1 - 3, dadurch **gekennzeichnet,** daß die Schablone (3) zur Herstellung von geraden Lochreihen aus einem langen lattenförmigen Körper von in etwa rechteckigem Querschnitt besteht, der entlang seiner Oberfläche mit mit Abstand hintereinander angeordneten Positionierungsbohrungen (5) für den Positionierungsstab (2) und gleichzeitig Tiefenbegrenzer und entlang seiner Mittellinie mit von dem Fräswerkzeug (11) zu durchgreifenden Ausnehmungen (12) versehen ist, die sich in einer Längsnut (13) der Schablone (3) befinden, welche gleichzeitig als Laufführung für die Oberfräse dient.

5. Vorrichtung nach einem der Ansprüche 1 - 4, dadurch **gekennzeichnet,** daß die Positionierungsbohrungen (5) der Schablone (3) wahlweise durch Stopfen verschließbar sind.

6. Vorrichtung nach einem der Ansprüche 1 - 5, dadurch **gekennzeichnet,** daß die Schablone (3) mit einer Halterungs- und Führungsvorrichtung (25) verbindbar ist, bestehend aus zwei zueinander parallel verlaufenden Winkelprofilschienen (16, 17), die durch wenigstens eine mit beiden Profilschienen gelenkig verbundene Verbindungslasche (18) in einem einstellbaren Abstand zueinander haltbar sind, der jeweils der Dicke des Werkstücks (22) entspricht, auf das die Schablone aufgesetzt wird und die mit Verbindungszapfen (23) versehen ist, welche in die Bohrungen (12) oder Ausnehmungen u.dgl. der Schablone eingreifen.

7. Vorrichtung nach Anspruch 6, dadurch **gekennzeichnet,** daß der gegenseitige Abstand A der beiden Winkelprofilschienen (16, 17) mit Hilfe der Verbindungslasche oder -laschen (18), die an dem einen Schenkel der beiden Winkelprofilschienen drehbar angebracht sind, stufenlos verstellbar ist.

8. Vorrichtung nach Anspruch 6 oder 7, dadurch **gekennzeichnet,** daß die Verbindungszapfen (23) an den Verbindungslaschen (18) angeordnet sind und sich in Richtung des Bodens (21) der Schablone (3) erstrecken, die auf die Führungs- und Halterungsvorrichtung (25) aufsetzbar ist.

9. Fräs- oder Bohrvorrichtung zur Herstellung von in Reihe in gleichen Abständen hintereinander in einem Werkstück herzustellenden Vertiefungen, Löchern, Bohrungen u.dgl., mittels einer auf das Werkstück auflegbaren Fräs- oder Bohrschablone, dadurch **gekennzeichnet,** daß die Schablone (3) zur Herstellung von geraden Lochreihen aus einem langen lattenförmigen Körper von in etwa rechteckigem Querschnitt besteht, der entlang seiner Mittellinie mit von dem Fräs- oder Bohrwerkzeug (11) zu durchgreifenden Bohrungen (12) versehen ist, die sich in einer Längsnut der Schablone (3) befinden, welche gleichzeitig als Laufführung für die Oberfräse dient, und daß das Fräs- oder Bohrwerkzeug von einem Anlaufringkörper (29) umgeben ist, dessen Durchmesser bzw. Umriß dem Durchmesser bzw. Umriß der von dem Fräs- oder Bohrwerkzeug zu durchgreifenden Bohrungen (12) u.dgl. entspricht und der in diese Bohrungen u.dgl. einrastbar ist.

10. Vorrichtung nach Anspruch 9, dadurch **gekennzeichnet,** daß die Schablone (3) mit einer Halterungs- und Führungsvorrichtung (25) verbindbar ist, bestehend aus zwei zueinander parallel verlaufenden Winkelprofilschienen (16, 17), die durch wenigstens eine mit beiden Profilen gelenkig verbundene Verbindungslasche (18) in einem einstellbaren Abstand zueinander haltbar sind, der jeweils der Decke des Werkstücks (22) entspricht, auf das die Schablone aufgesetzt wird und die mit Verbindungszapfen (23) versehen ist, welche in die Bohrungen (12) u.dgl. der Schablone eingreifen.

11. Vorrichtung nach Anspruch 10, dadurch **gekennzeichnet**, daß der gegenseitige Abstand B der beiden Winkelprofilschienen (16, 17) mit Hilfe der Verbindungslasche oder -laschen (18), die an dem einen Schenkel der beiden Winkelprofilschienen drehbar angebracht sind, stufenlos verstellbar ist.

12. Vorrichtung nach Anspruch 10 oder 11, dadurch **gekennzeichnet**, daß die Verbindungszapfen (23) an den Verbindungslaschen (18) angeordnet sind und sich in Richtung des Bodens (21) der Schablone (3) erstrecken, die auf die Führungs- und Halterungsvorrichtung (25) aufsetzbar ist.

13. Vorrichtung nach einem der Ansprüche 1-12, dadurch **gekennzeichnet**, daß die Schablone (3) mit Hife eines eine der Bohrungen (12) in der Längsnut (13) durchgreifenden Arretierungsstiftes (15) um weitere Längsstücke verlängerbar ist, wobei der Arretierungsstift (15) auch eine entsprechende Bohrung (12) des Verlängerungsstücks durchgreift.

14. Vorrichtung nach einem der Ansprüche 1-13, dadurch **gekennzeichnet**, daß der oder die Anschläge (8) an den Außenrändern (7) der Schablone (3) mit Abstandsschrauben (16a) zur exakten Justierung der Schablone (3) in bezug auf das zu bearbeitende Werkstück (6) versehen sind, die gegen die Randkanten (9) des Werkstücks schraubbar sind.

Fig.1

Fig.4

Fig.3

SCHNITT Ⅲ-Ⅲ

Fig.5

Fig.2

EP 0 445 363 A1

Fig. 11

A

1

10

3

4

6

9

29

13

11

14

3

5

7

7

7

13

12

7

21

16

25

20

28

22

27

18

19

17

Fig. 6

EP 0 445 363 A1

Fig. 9

Fig. 8

Fig. 10

Fig. 7

Europäisches
Patentamt

**EUROPÄISCHER
RECHERCHENBERICHT**

Nummer der Anmeldung

**EP 90 12 1426**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | CH-A-6 196 36   (F. HALDEMANN) <br> * Seite 2, Spalte 2, Zeilen 5-25; Figur 1 * <br> – – – | 1,2 | B 23 B 47/28 |
| Y | AT-A-3 849 76   (H. PFOHL et al.) <br> * Seite 3, Zeilen 22-26; Figur 1 * <br> – – – | 1,2 | |
| X | FR-A-2 318 011   (J. PINOT) <br> * Seite 3, Zeilen 3-18; Seite 4, Zeilen 15-32; Figuren 1-5 * | 9,10,13 | |
| A | <br> – – – – – | 5,6,7,8 | |

|  |  | RECHERCHIERTE SACHGEBIETE (Int. Cl.5) |
|---|---|---|
|  |  | B 23 B <br> B 27 C <br> F 05 C |

Der vorliegende Recherchenbericht wurde für alle Patentansprüche erstellt

| Recherchenort | Abschlußdatum der Recherche | Prüfer |
|---|---|---|
| Den Haag | 10 Mai 91 | RAMBAUD P.M.J. |